# EUROPEAN PATENT SPECIFICATION

(11) **EP 2 784 884 B1**
(45) Date of publication and mention of the grant of the patent: **20.04.2016**
(21) Application number: 14156724.8
(22) Date of filing: 26.02.2014
(51) Int. Cl.: H02B 1/044, H05K 5/02

(54) **Electrical device and electrical device fastener**
Elektrische Vorrichtung und Befestigungselement für eine elektrische Vorrichtung
Dispositif électrique et fixation de dispositif électrique

(30) Priority: 28.03.2013 JP 2013067897
(43) Date of publication of application: 01.10.2014
(73) Proprietor: OMRON CORPORATION, Kyoto, Kyoto 600-8530 (JP)
(72) Inventor: Takahashi, Kei, Kyoto, Kyoto 600-8530 (JP); Yamada, Daisuke, Kyoto, Kyoto 600-8530 (JP)
(74) Representative: Horn Kleimann Waitzhofer Patentanwälte PartG mbB

(56) References cited:
- EP-A1- 0 154 782
- EP-B1- 1 090 447
- CH-A5- 662 693
- JP-A- 2007 122 551
- JP-A- 2012 028 493

## Description

### FIELD

The present invention relates to an electrical device that is to be installed onto a panel, and more particularly, to an electrical device that is preassembled with a fastener for fastening such an electrical device to a panel such as a control board.

### BACKGROUND

Electrical devices for industrial use are commonly fastened to panels such as control boards for their installation. Such an electrical device is fitted into an opening in a panel to position its body part backward from the panel and its display and other parts frontward from the panel after the installation.

This installation involves a separate process of attaching electrical device fasteners, which are used to fasten the electric device, to the housing of the electrical device after the electronic device is fitted into the opening of the panel. The electrical device fasteners are then pressed against the panel, causing the panel to be sandwiched between a front portion of the housing of the electric device around the panel opening, which is frontward from the panel, and the electrical device fasteners. As a result, the electrical device is fastened to the panel.

This fastening mechanism, or fastening the electrical device to the panel with the electrical device fasteners that are attached to the electrical device in the separate process performed after the electrical device is fitted into the panel, is described in, for example, Japanese Unexamined Patent Publication No. 2007-122551 (Patent Literature 1).

To achieve the fastening mechanism described in Patent Literature 1, the electrical device has a flange on the front end of the housing, and mating holes, for receiving the electrical device fasteners, formed in the outer surface of a back portion of the housing positioned backward from the panel installed. Each electrical device fastener includes an elongated plate that elongates along the outer surface of the facing part of the housing, mating pieces arranged in the longitudinal direction of the plate to correspond to the mating holes of the housing, threaded holes formed in the surface of the plate facing the panel installed, and screws to be screwed into the threaded holes.

With the above fastening mechanism, the electrical device is first fitted in the panel. In that state, the mating pieces of the electrical device fasteners are placed into the mating holes of the housing. After the electrical device fasteners are attached to the housing, the front ends of the screws, which have been screwed into the threaded holes from the back, are pressed against the back surface of the panel. This causes the panel to be sandwiched between the flange of the housing on the front surface of the electrical device and the electrical device fasteners. As a result, the electrical device is fastened to the panel.

Another fastening mechanism, which temporarily fastens an electrical device fitted in a panel before the electrical device is fastened completely, is described in, for example, Japanese Unexamined Patent Publication No. 2012-28493 (Patent Literature 2).

For the fastening mechanism described in Patent Literature 2, the electrical device includes at least three mating ribs on its housing, which can mate with the opening of the panel. Each mating rib is positioned to avoid overlap with a line drawn to connect the other mating ribs. At least one of the mating ribs is a movable rib, which is pressed at the edge of the opening and moves into the housing when the housing is fitted into the opening. For example, the mating ribs may include two ribs arranged on both sides of the lower surface of the housing, and one rib arranged in the middle of the upper surface of the housing. The rib in the middle of the upper surface may be a movable rib.

The electrical device with the above mechanism may be placed into the opening of the panel in the manner described below. The lower portion of the electrical device is first placed into the opening, and the mating ribs on the lower surface of the electrical device are mated with the opening of the panel. The upper portion of the electrical device is then placed into the opening, allowing the movable rib to deform flexibly. As the movable rib then returns to its original state, the mating ribs on the upper surface achieve mating. As a result, the electrical device is temporarily fastened to the panel. After this temporary fastening, electrical device fasteners are attached to the housing of the electrical device at positions backward from the panel, and then screws of the electrical device fasteners are pressed into the panel. This causes the panel to be sandwiched between the flange of the housing on the front surface of the electrical device and the electrical device fasteners. As a result, the electrical device is fastened to the panel.

EP 0 154 782 A1 discloses a housing for control and indicating apparatus, with a rectangular cross-section, a front frame, and two screws which are situated in opposite positions and parallel to the longitudinal axis of the housing, which are mounted rotatably and non-loosably in the housing and whose screwthreaded shank in each case extends through an outwardly open housing recess and carries in the housing recess a clamping element, which clamping element being pivotable between two end positions when the respective screw is turned, in the first end position having portions projecting beyond the recess and in the second position being situated within the recess, characterised in that the screws are situated diagonally opposite one another, that the recess opens into both housing surfaces which meet at a corner, and that the clamping element in the second end position projects with one portion beyond the one housing surface and with another portion beyond the other housing surface, the projecting portions each having a clamping surface, these clamping surfaces being situated in a plane parallel to the facing side of the frame.

### CITATION LIST

### PATENT LITERATURE

Patent Literature 1: Japanese Unexamined Patent Publication No. 2007-122551
Patent Literature 2: Japanese Unexamined Patent Publication No. 2012-28493

### SUMMARY

### TECHNICAL PROBLEM

In general, the operation of fastening an electrical device onto a panel such as a control board is often conducted by users. Electrical devices require high workability and easy and quick installation, and also require the above operation to achieve secure fastening, without causing loose attachment of the electrical device fasteners.

The fastening mechanisms described in Patent Literature 1 and Patent Literature 2 require the separate process of attaching the electrical device fasteners to the housing after the electrical device is fitted into the panel. This increases the man-hours and lowers the work efficiency.

Further, any failures that may occur in attaching the electrical device fasteners to the housing of the electrical device, including misaligned and tilted fasteners and insecurely attached fasteners, can cause the fastened electrical device to be tilted against to the panel or can cause the electrical device fasteners to detach easily. This may require the above fastening operation to be conducted again, and may further lower the work efficiency.

The above fastening mechanisms further require the electrical device fasteners to be prepared separately. If such electrical device fasteners are lost, the electrical device fasteners cannot be attached and the electrical device cannot be fastened to the panel. Moreover, other electronic devices may be installed in the environment surrounding the electrical device. If an electrical device fastener is mistakenly dropped, the electrical device fastener may come in contact with such other electronic devices, and may short-circuit and damage the other electronic devices.

At factories or research facilities where the electrical device is likely to be installed, the floor may often be covered by gratings. If an electrical device fastener is mistakenly dropped through the grating, the work may need to be stopped.

To solve these problems, it is an object of the present invention to provide an electrical device comprising an electrical device fastener that allows for easy and quick fastening to a panel as well as achieve secure fastening.

### SOLUTION TO PROBLEM

An electrical device according to an aspect of the present invention is an electrical device to be fitted into an opening of a panel and fastened to the panel. The electrical device includes a housing including a front portion to be positioned frontward from the panel and a back portion to be positioned backward from the panel when the electrical device is fastened to the panel, and an electrical device fastener configured to install the housing onto the panel in a removable manner. The electrical device fastener is attached to the housing in a rotatable manner to move between a first position enabling the housing to be installed onto the panel and a second position disabling the housing to be installed onto the panel. The housing includes, on a contour surface thereof, a flange extending outwardly. The electrical device fastener includes a base having a screw-receiving hole, and a screw that is screwed with the screw-receiving hole. The housing includes, on a contour surface thereof, a shaft extending in a contour direction of the housing. The electrical device fastener includes an engagement part that extends from the base and is engaged with the shaft in a rotatable manner. When the electrical device fastener is at the first position, an end of the screw faces the flange. When the electrical device fastener is at the second position, the end of the screw does not face the flange. The housing includes a movement restricting part that restricts backward movement of the base when the electrical device fastener is at the first position. The electrical device according to the above aspect of the invention is configured such that when, in the electrical device fitted in the opening of the panel, the electrical device fastener is moved from the second position to the first position and the screw is screwed into the base, the movement restricting part restricts backward movement of the base to cause an edge of the opening of the panel to be sandwiched between the flange and the screw and thereby install the housing onto the panel with the electrical device fastener and fasten the electrical device to the panel.

In the electrical device according to the above aspect of the invention, it is preferable that the electrical device fastener further includes a latch part that extends from the base. It is preferable that the movement restricting part includes a contact surface that is adapted to come in contact with the latch part.

In the electrical device according to the above aspect of the invention, it is preferable that the engagement part and the latch part are each shaped like a hook.

In the electrical device according to the above aspect of the invention, it is preferable that the engagement part comprises a pair of engagement parts arranged in a longitudinal direction of the shaft, and each engagement part extends from the base. It is preferable that the latch part extends from a portion of the base that is between the pair of engagement parts.

In the electrical device according to the above aspect of the invention, it is preferable that the housing further includes a lightly-holding mechanism that is adapted to come in contact with the electrical device fastener to restrict rotation of the electrical device fastener when the electrical device fastener is at the second position. It is preferable that the electrical device fastener is adapted to be rotated against restriction placed by the lightly-holding mechanism to enable movement of the electrical device fastener from the second position to the first position.

In the electrical device according to the above aspect of the invention, it is preferable that the housing further includes an accommodating unit for accommodating the electrical device fastener when the electrical device fastener is at the second position. It is preferable that the shaft extends across the accommodating unit.

In the electrical device according to the above aspect of the invention, it is preferable that the housing includes a front housing that forms a frontward portion of the contour surface, and a rear housing that forms a backward portion of the contour surface and is joined to the front housing. In this case, it is preferable that the accommodating unit is formed at a boundary between the front housing and the rear housing on the contour surface, and the shaft is arranged in the front housing. It is also preferable that the accommodating unit is a recess formed in the front housing and the rear housing.

### ADVANTAGEOUS EFFECTS

The electrical device of the present invention comprising the electrical device fastener allows for easy and quick fastening to a panel as well as achieve secure fastening.

### BRIEF DESCRIPTION OF THE DRAWINGS

Fig. 1 is a perspective view of an electrical device according to an embodiment of the present invention;
Fig. 2 is a perspective cutaway view of the electrical device shown in Fig. 1;
Fig. 3 is a schematic perspective view showing the state of the electrical device in Fig. 1 fastened to a panel;
Fig. 4 is a schematic view of an electrical device fastener for the electrical device shown in Fig. 1;
Fig. 5 is a perspective cutaway view of the electrical device fastener for the electrical device shown in Fig. 1;
Fig. 6 is a schematic view of an accommodating unit of the electrical device shown in Fig. 1;
Fig. 7 is a schematic view showing the state of the electrical device fastner accommodated in the accommodating unit shown in Fig. 6;
Fig. 8 shows the state of the electrical device in Fig. 1 being fastened by the step-by-step procedure;
Fig. 9 shows the state of the electrical device in Fig. 1 being fastened by the step-by-step procedure;
Fig. 10 shows the state of the electrical device in Fig. 1 being fastened by the step-by-step procedure; and
Fig. 11 shows the state of the electrical device in Fig. 1 being fastened by the step-by-step procedure.

### DETAILED DESCRIPTION

Embodiments of the present invention will now be described in detail with reference to the drawings. The same or common components in the embodiments are given the same reference numerals and are not described repeatedly.

### Embodiment

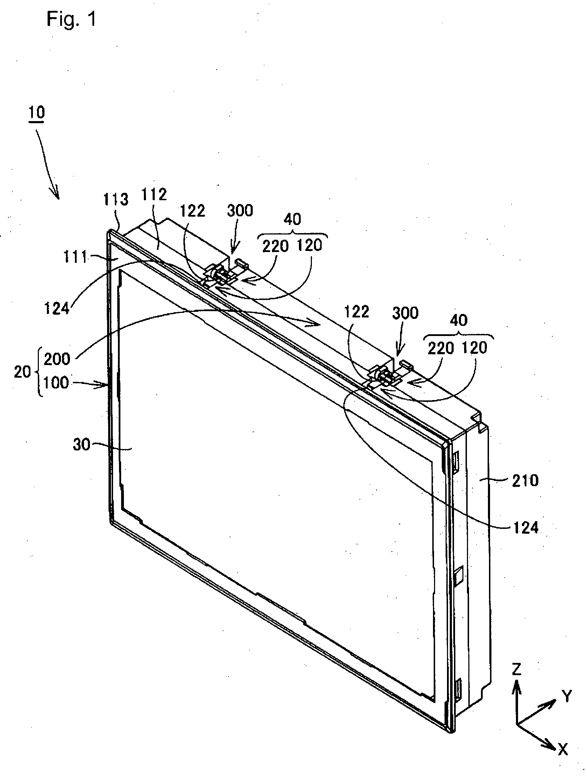

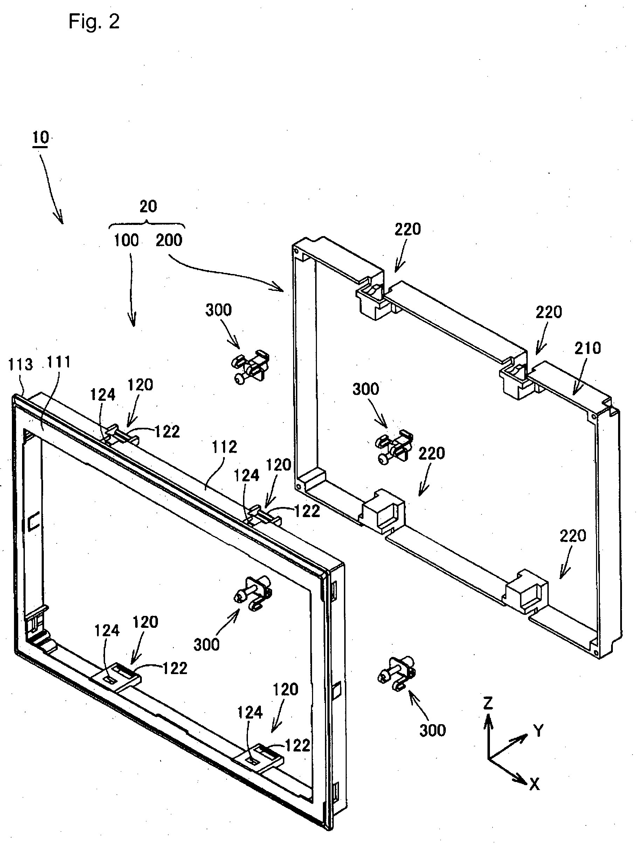

Fig. 1 is a schematic perspective view of an electrical device according to the present embodiment. Fig. 2 is a perspective cutaway view of the electrical device shown in Fig. 1. An electrical device 10 according to the present embodiment will now be described with reference to Figs. 1 and Fig. 2. For ease of explanation, Fig. 2 does not show internal components 30 arranged in the electrical device 10.

As shown in Figs. 1 and 2, the electrical device 10 according to the present embodiment includes a housing 20 and electrical device fasteners 300. The housing 20 is box-shaped, and has an uncovered front, at which its accommodating space is exposed. The housing 20 accommodates, in its accommodating space, various internal components 30, which close the uncovered front of the housing 20.

The internal components 30 include a touch panel integrating a touch sensor and a display, and a circuit board for controlling the touch panel. In the present embodiment, the touch panel with operation functions is arranged to close the uncovered front of the housing 20, and allows for switching of the operating mode and for various settings of the electrical device 10.

The housing 20 includes a front housing 100 and a rear housing 200. On its contour surface, the housing 20 has accommodating units 40, a flange 111, shafts 122, and movement restricting parts 124.

The accommodating units 40 for accommodating electrical device fasteners 300 are recesses formed in the contour surface of the housing 20. On the upper and lower side surfaces of the housing 20, the accommodating units 40 are arranged in parallel in the horizontal direction (X-direction in the figure) and symmetric in the vertical direction (Z-direction in the figure).

The front housing 100 may be, for example, an injection-molded piece. The front housing 100 forms a frontward portion of the contour surface of the housing. The front housing 100 includes a flange 111 on its distal front end, and a frame 112 extending backward from the flange 111 (Y-direction in the figure).

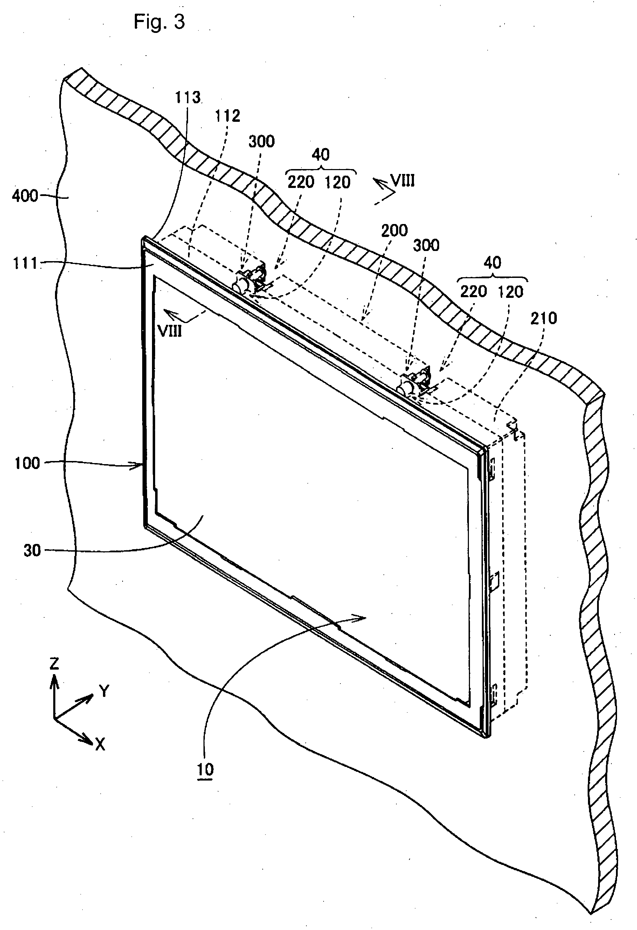

The flange 111 adjusts the relative positions of the electrical device 10 and a panel 400 (refer to Fig. 3) (described later) and is fixed to the panel 400 when the electrical device 10 is installed onto the panel 400. The flange 111 extends outwardly on the distal front end of the contour surface of the frame 112, and thus has its back surface 113 protruding outwardly from the frame 112.

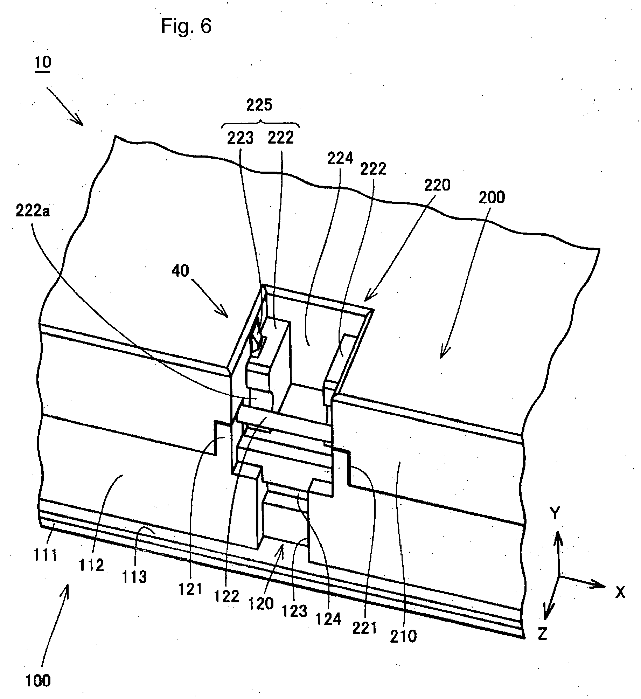

The frame 112 further has, on its upper side and its lower side, first structural parts 120, at positions corresponding to the accommodating units 40. Each first structural part 120 has a recess 123 (refer to Fig. 6) (described later) formed in the frame 112. The recess 123 is a part of the accommodating unit 40. The structure of the first structural part 120 will be described in detail later.

Each shaft 122 supports the corresponding electrical device fastener 300 in a manner rotatable about the axis of rotation in the direction parallel to the panel 400. The shaft 122 extends in the contour direction of the frame 112. The shaft 122 extends, for example, in the horizontal direction (X-direction in the figure) across the accommodating unit 40.

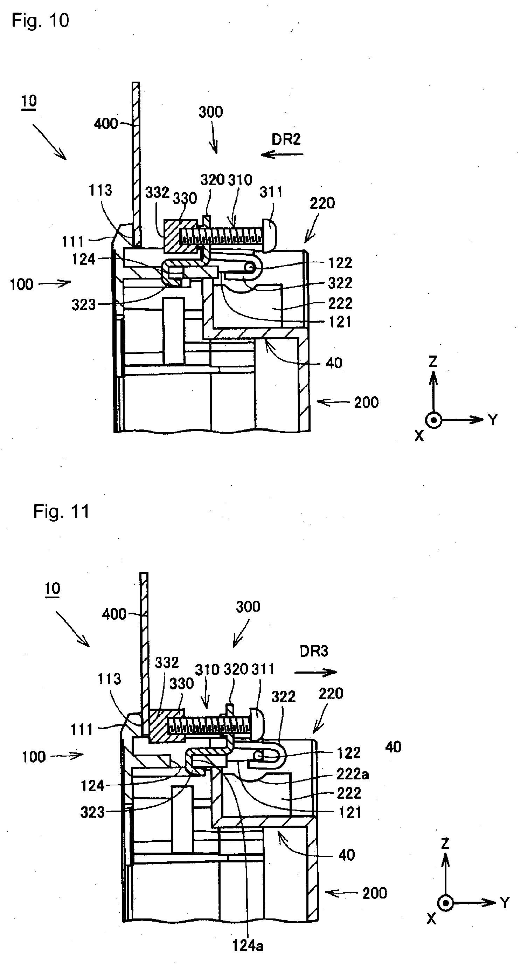

Each movement restricting part 124 restricts backward movement of the corresponding electrical device fastener 300 (described later), which differs from rotation of the electrical device fastener 300. The movement restricting part 124 is defined by, for example, forming a through-hole in the frame 112 in the vertical direction (Z-direction in the figure). The movement restricting part 124 includes a contact surface 124a (refer to Fig. 11) (described later), which comes in contact with the electrical device fastener 300 when restricting the backward movement of the electrical device fastener 300.

The rear housing 200 is, for example, an injection-molded piece. The rear housing 200 forms a backward portion of the contour surface of the housing 20. The rear housing 200 includes a side wall 210, which extends frontward (in negative Y-direction) from the distal end of the back surface and is shaped in conformance with the frame 112. As a result, the rear housing 200 is box-shaped, and has an uncovered front surface.

The side wall 210 further has, on its upper side and lower side, second structural parts 220, at positions corresponding to the accommodating units 40. Each second structural part 220 has a recess 224 (refer to Fig. 6) formed in the side wall 210. The recess 224 is a part of the accommodating unit 40. The second structural part 220 lightly holds the accommodated electrical device fastener 300, and leaves the area in which the electrical device fastener 300 can rotate. The structure of the second structural part 220 will be described in detail later.

The front housing 100 and the rear housing 200 are placed such that the back end of the front housing 100 and the front end of the rear housing 200 are in contact with each other. In this state, screws are placed through the back surface of the rear housing 200 to join the front housing 100 and the rear housing 200 together. At the same time, the first structural parts 120 and the second structural parts 220 are joined together to define the accommodating units 40.

The first structural parts 120 and the second structural parts 220 each extend from the front ends of the frame 112 and the side wall 210 toward their back ends. The accommodating units 40 are formed at the boundary between the front housing 100 and the rear housing 200 on the contour surface of the housing 20.

The electrical device fasteners 300, which may for example be metal pieces, are used to install the housing 20 onto the panel 400 in a removable manner. The electrical device 10 is preassembled with the electrical device fasteners 300, which are attached to the corresponding shafts 122 in a rotatable manner relative to the housing 20. The electrical device fasteners 300 are accommodated in the accommodating units 40 before the electrical device 10 is fastened.

In the accommodating unit 40, each electrical device fastener 300 is lightly held by a lightly-holding mechanism 225 (refer to Fig. 6) (described later), which is arranged in the second structural part 220. This restricts rotation of the electrical device fastener 300. To fasten the electric device, the electrical device fastener 300 is rotated against the restriction placed by the lightly-holding mechanism 225, to remove the lightly held state of the electrical device fastener 300, which has been held with the lightly-holding mechanism 225. This enables the electrical device fastener 300 to be rotatable.

Fig. 3 is a schematic perspective view showing the state of the electrical device Fig. 1 fastened to the panel. The fastened state of the electrical device 10 of the present embodiment to the panel 400 will now be described with reference to Fig. 3.

As shown in Fig. 3, the electrical device 10, fitted in the opening of the panel 400 such as a control board, is to be fastened to the panel 400. When the electrical device 10 is fitted in the panel 400, the back surface 113 of the flange 111 of the housing 20 comes in contact with the front surface of the panel 400 to position the electrical device 10 relative to the panel 400. The portion of the housing 20 of the electrical device including the flange 111 is positioned frontward from the panel 400, whereas the portion of the housing 20 of the electrical device 10 at the back of the flange 111 is positioned backward from the panel 400.

In the electrical device 10 positioned in the manner as described above, the electrical device fasteners 300 are rotated from the back toward the front about the axis of rotation in the direction parallel to the panel 400 (X-direction in the figure) and move out of the accommodating units 40 to press the panel 400. This causes the panel 400 to be sandwiched between the flange 111 and the electrical device fasteners 300. As a result, the housing 20 is installed onto the panel 400 with the electrical device fasteners 300, and the electrical device 10 is fastened to the panel 400. The operation of the electrical device fasteners 300 performed during this fastening process will be described later.

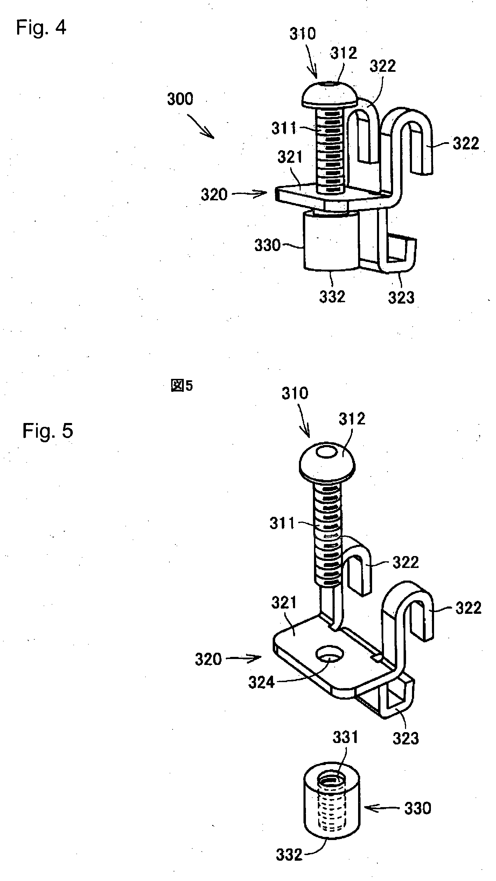

Fig. 4 is a schematic view of the electrical device fastener for the electrical device shown in Fig. 1. Fig. 5 is a perspective cutaway view of the electrical device fastener for the electrical device shown in Fig. 1. The electrical device fastener 300 for the electrical device 10 according to the present embodiment will now be described with reference Figs. 4 and 5.

As shown in Figs. 4 and 5, the electrical device fastener 300 includes a screw unit 310, a base 320, and a pair of engagement parts 322. The screw unit 310 can be pressed into the panel 400 during the fastening process. The screw unit 310 includes a screw 311 with a screw head 312, which is to be placed at one side, and a pressing member 330 to be placed at the opposite side.

The base 320 is a flat plate, and has a screw-receiving hole 324 in its center, which allows the screw unit 310 to be placed through. The screw unit 310 is screwed with the screw-receiving hole 324 to set the screw unit 310 in a manner movable relative to the base 320.

The pair of engagement parts 322 can be engaged with the corresponding shaft 122 in a rotatable manner. The two engagement parts 322 extend, in the direction of the screw head 312, from both ends of one long side of a main surface 321 of the base 320. Each engagement part 322 is shaped like a hook, which bends away from the other long side of the main surface 321 in the direction from the screw head 312 toward the pressing member 330.

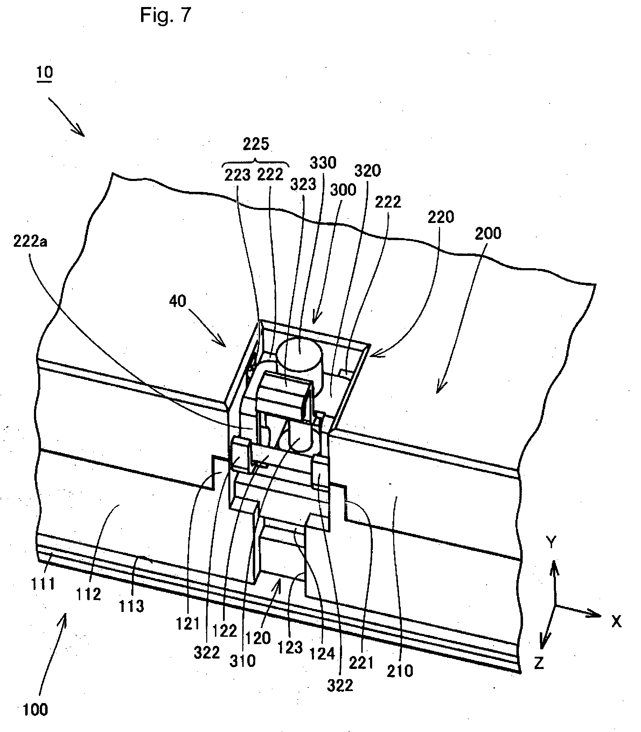

The base 320 is accommodated in the accommodating unit 40 such that the longitudinal direction of the main surface 321 is parallel to the shaft 122 (refer to Fig. 7). Thus, the two engagement parts 322 are arranged in parallel in the longitudinal direction of the shaft 122.

A latch part 323 is arranged between the two engagement parts 322, which are on both sides of one long side of the main surface 321 of the base 320. The latch part 323 is positioned at the same side as the pressing member 330 from the main surface 321 of the base 320. The latch part 323 is shaped like a hook, which bends away from the other long side of the main surface 321 of the base 320 in the direction from the pressing member 330 toward the screw head 312. The latch part 323 is engaged with the movement restricting part 124, which will be described later.

The pressing member 330 is substantially cylindrical, and has a threaded hole 331 on one end, which is screwed with the distal end of the screw unit 310 opposite to the screw head 312, and a pressing surface 332 on the other end, which can press the panel 400.

The screw unit 310 includes the screw 311, which is placed through the screw-receiving hole 324 on the side where the engagement parts 322 of the base 320 are arranged, and the pressing member 330, which is then screwed with the distal end of the screw 311 opposite to the screw head 312.

Fig. 6 is a schematic view of the accommodating unit of the electrical device shown in Fig. 1. Fig. 7 is a schematic view showing the state of the electrical device fastener accommodated in the accommodating unit shown in Fig. 6. The accommodating unit 40 of the electrical device 10 according to the present embodiment will now be described with reference to Figs. 6 and 7.

As shown in Figs. 6 and 7, the accommodating unit 40 includes the first structural part 120 of the front housing 100 and the second structural part 220 of the rear housing 200 that are joined together.

The first structural part 120 includes a pair of protrusions 121, a shaft 122, a recess 123, and a movement restricting part 124.

The two protrusions 121, arranged separate from each other with a space between them, protrude from the back end of the frame 112 (in positive Y-direction in the figure). The recess 123 is formed between the two protrusions 121. The recess 123, which is a part of the frame 112 recessed in the direction of the accommodating space, is substantially T-shaped and extends from the back surface 113 of the flange 111 to the back end of the frame 112. The shaft 122 connects the distal ends of the two protrusions 121 in the horizontal direction (X-direction in the figure). The movement restricting part 124 is arranged in substantially the middle of the recess 123. The movement restricting part 124 is defined by forming a through-hole in the frame 112 in the vertical direction (Z-direction in the figure).

In the above-described structure, as shown in Fig. 7, the shaft 122 and the recess 123 define a space that partially accommodates the two engagement parts 322 of the electrical device fastener 300. Thus, the first structural part 120 defines a part of the accommodating unit 40.

In the fastened state described above, the recess 123 allows the larger area of the back surface 113 of the flange 111 to face a part of the pressing member 330 of the electrical device fastener 300 (refer to Figs. 3 and 11). This increases the area of contact between the panel 400 at the back surface 113 of the flange 111 and the pressing member 330 in the fastened state, and thus achieves secure fastening.

The second structural part 220 includes a pair of recesses 221, a pair of seats 222, a protrusion 223, and a recess 224.

The two recesses 221, arranged separate from each other with a space between them, are recessed from the front end of the side wall 210 backward (positive Y-direction in the figure). The two recesses 221 correspond to the protrusions 121, and are shaped to receive the corresponding protrusions 121.

The recess 224 is formed between the two recesses 221. The recess 224 is a part of the side wall 210 recessed from the front end of the side wall 210 to the back end in the direction of the accommodating space. The recess 224 is sandwiched between the two seats 222, which are separate from each other with a space between them. The protrusion 223 is behind the left seat 222 at a position separate from the left seat 222. The protrusion 223 is flexibly deformable.

As shown in Fig. 7, the electrical device fastener 300 is accommodated into the accommodating unit 40 such that the engagement parts 322 are in front of the shaft 122 (negative Y-direction in the figure) and the pressing member 330 and the latch part 323 face backward (positive Y-direction in the figure). In the accommodated state of the electrical device fastener 300, the latch part 323 is positioned outward from the pressing member 330 (upward, or positive Z-direction in the figure).

In the accommodated state of the electrical device fastener 300, the base 320 comes in contact with the seats 222 and the protrusions 223. In this state, the protrusions 223 flexibly deform and press the base 320 against the seats 222. As a result, the base 320 is lightly held by the seats 222 and the protrusions 223. In this manner, the second structural part 220 includes the lightly-holding mechanism 225, which includes the protrusions 223 and the seats 222.

In the accommodated state of the electrical device fastener 300, the screw head 312 of the screw unit 310 is accommodated in the space between the seats 222. The space between the seats 222 allows the screw unit 310 to rotate. Each seat 222 has a curved top surface 222a, which is curved downward (negative Z-direction in the figure). This prevents the engagement parts 322, which are arranged to face the screw unit 310 and the seats 222, from coming in contact with the seats 222 when the electrical device fastener 300 rotates. In this manner, the second structural part 220 leaves the area in which the electrical device fastener 300 can rotate.

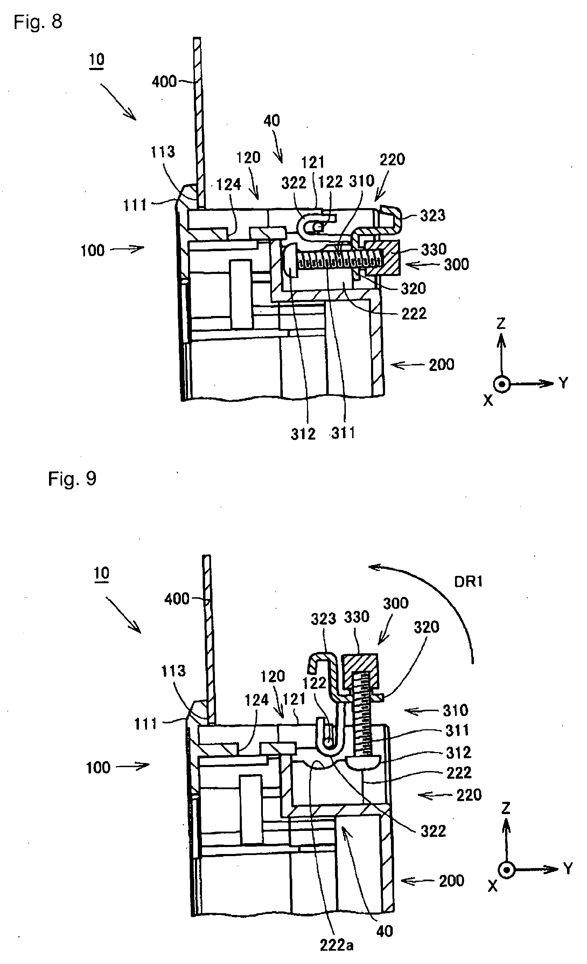

Figs. 8 to Fig. 11 show the state of the electrical device shown in Fig. 1 being fastened by the step-by-step procedure. Figs. 8 to 11 are cross-sectional views taken along line VIII-VIII of Fig. 3. The operation of the electrical device fastener 300 performed when the electrical device 10 is fastened to the panel 400 will now be described with reference to Figs. 8 to 11.

To fasten the electrical device 10, as shown in Fig. 8, the electrical device 10 is first fitted into the front opening of the panel 400, with each electrical device fastener 300 being accommodated in the corresponding accommodating unit 40 of the electrical device 10. The back surface 113 of the flange 111 on the front end of the front housing 100 comes in contact with the front surface of the panel 400 to determine the fastening position of the electrical device 10.

The electrical device fastener 300 is lightly held by the lightly-holding mechanism 225, with the engagement parts 322 and the latch part 323 being positioned outward (upward, or positive Z-direction in the figure) and the base 320 being positioned inward (downward, or negative Z-direction in the figure), and the space being left between the bent parts of the engagement parts 322 and the shaft 122 of the front housing 100.

The pressing member 330 on the distal end of the screw unit 310 of the electrical device fastener 300, which is lightly held, faces backward (in positive Y-direction in the figure) instead of facing the panel 400. At the position where the electrical device fastener 300 is held lightly, the pressing member 330 cannot press the panel 400. Thus, the position where the electrical device fastener 300 is held lightly corresponds to a second position disabling the housing 20 to be installed onto the panel 400.

Subsequently, the electrical device fastener 300 is rotated against the restriction placed by the lightly-holding mechanism 225, to remove the lightly held state of the electrical device fastener 300. This causes the engagement parts 322 to be engaged with the shaft 122, and enables the electrical device fastener 300 to be rotatable.

As shown in Fig. 9, the electrical device fastener 300, which is rotatable, then rotates in the direction indicated by DR1 about the axis of rotation in the longitudinal direction of the shaft 122. This moves the engagement parts 323 toward the front housing 100, and moves the pressing member 330 on the distal end of the screw unit 310 toward the panel 400.

In the electrical device fastener 300 that has rotated in DR1 direction, as shown in Fig. 10, the bent parts of the engagement parts 323 are placed into the through-hole, which defines the movement restricting part 124. The latch part 323, on the same side as the base 320, then comes in contact with the contour surface of the front housing 100.

In this state, the pressing member 330 on the distal end of the screw unit 310 faces the panel, which comes in contact with the back surface 113 of the flange 111. The position at which the latch part 323 on the same side as the base 320 comes in contact with the contour surface of the front housing 100 corresponds to a first position enabling the housing 20 to be installed onto the panel 400. At the first position, the screw unit 310 is screwed through the base 320 in DR2 direction to press the pressing member 330 against the panel 400.

As shown in Fig. 11, as the screw unit 310 is screwed through the base 320, the base 320 moves backward (in DR3 direction) to disengage the shaft 122 from the engagement parts 322, and cause the latch part 323 to come in contact with the contact surface 124a of the movement restricting part 124. This restricts backward movement of the base 320.

With the backward movement of the base 320 being restricted, the screw unit 310 is further screwed through the base 320 toward the panel 400 to cause the pressing surface 332 of the pressing member 330 to press the edge of the opening of the panel 400. As the screw unit 310 is screwed further, the latch part 323 presses the contact surface 124a of the movement restricting part 124 backward. As a result, the housing 20 is pulled backward.

As the housing 20 is pulled to move backward, the flange 111 on the front end of the panel 400 presses the panel 400 backward. This causes the edge of the opening of the panel 400 to be sandwiched between the flange 111 and the screw unit 310. As a result, the housing 20 of the electrical device 10 is installed onto the panel 400 with the electrical device fasteners 300, and the electrical device 10 is fastened to the panel 400.

To preassemble the housing 20 with the electrical device fasteners 300, the operation substantially reverse to the above-described operation of the electrical device fasteners 300 in the fastening process is performed. More specifically, the engagement parts 322 are first engaged with the shaft 122 such that the base 320 is positioned outward from the front housing 100. Subsequently, the rear housing 200 is joined to the front housing 100 to define the accommodating units 40 for the electrical device fasteners 300. Each electrical device fastener 300 is then rotated about the shaft 122 such that the electrical device fastener 300 is accommodated into the accommodating unit 40. Each electrical device fastener 300 rotated and accommodated in the accommodating unit 40 is held lightly by the lightly-holding mechanism 225.

In the electrical device 10 based on the present invention, as described above, the electrical device fasteners 30 are attached to the housing 20 in a rotatable manner such that each electrical device fastener 30 can move from the second position, at which the distal end of the screw unit 310 does not face the panel and thus the housing 20 cannot be installed onto the panel 400, to the first position, at which the distal end of the screw unit 310 faces the panel and thus the housing 20 can be installed onto the panel 400.

The housing 20 includes the movement restricting part 124, which restricts backward movement of the base 320 when the electrical device fastener 300 is at the first position described above.

To fasten the electrical device 10 to the panel 400, each electrical device fastener 300 is moved from the second position to the first position. In this state, the screw unit 310 of each electrical device fastener 300 is screwed through the base 320. The movement restricting part 124 restricts backward movement of the base 320. This causes the edge of the opening of the panel 400 to be sandwiched between the flange 111 and the screw unit 310. As a result, the housing 20 is installed onto the panel 400 with the electrical device fasteners 300, and the electrical device 10 is fastened to the panel 400.

As described above, the electrical device 10 according to the present embodiment is preassembled with the electrical device fasteners 300, and thus eliminates the separate process of attaching the electrical device fasteners 300 to the electrical device 10 conventionally required after the electrical device 10 is fitted. This enables the electrical device 10 to be fastened to the panel quickly.

The electrical device 10 according to the present embodiment can be fastened to the panel 300 by performing the relatively simple operation of rotating the preassembled electrical device fasteners 300 and then screwing the screw units.

The electrical device 10 according to the present embodiment further includes the movement restricting parts 124, which each are engaged with the corresponding latch part 323 extending from the base 320 when the screw unit 310 is screwed through the base 320, allowing the base 320 to be fixed to the housing 20. This prevents each electrical device fastener 300 from detaching during work, and enables the electrical device 10 to be fastened in a secure manner without causing loose positioning of the base 320. Further, the engagement parts 322 and the shaft 122 remain engaged while the electrical device fasteners 300 are being rotated. This prevents the electrical device fasteners 300 from being lost, and thus prevents interruptions that might otherwise occur during the installation work.

In the electrical device 10 according to the present embodiment, the electrical device fasteners 300 can be attached to the housing 20 by first placing the engagement parts 322 of each electrical device fastener 300 engaged with the shaft 122 in a rotatable manner and then rotating the electrical device fasteners 300 into the accommodating units 40. This structure also allows the electrical device fasteners 300 to be easily preassembled into the housing 20.

The electrical device 10 according to the present embodiment may be preassembled with the electrical device fasteners 300 and thus allow for easy and quick fastening to the panel as well as achieve secure fastening.

In the above embodiment, the pair of electrical device fasteners 300 and the corresponding accommodating units 40 are arranged on each of the upper and lower surfaces of the housing 20 such that the electrical device fasteners 300 are parallel to each other in the horizontal direction and symmetric to each other in the vertical direction. The embodiment should not be limited to this structure. The number of electrical device fasteners 300 and the corresponding accommodating units 40 and their arrangement may be modified as necessary. For example, one electrical device fastener 300 and the corresponding accommodating unit 40 or three or more electrical device fasteners 300 and the corresponding accommodating units 40 may be arranged on each of the upper and lower surfaces of the housing 20 in the same arrangement as described above. Alternatively, one or more electrical device fasteners 300 and the corresponding accommodating units 40 may be arranged on each of the left and right side surfaces of the housing 20.

Although the housing 20 includes the accommodating units 40 in the above embodiment, the embodiment should not be limited to this structure. The housing 20 may not include the accommodating units 40. In this case, the flange 111 may be thicker, and the electrical device fasteners 300 may be attached to the contour surface of the housing 20 inward at the back of the flange 111. In this case, the screw unit 310 may be set on the housing 20 in a manner to move outward from the set position and press the panel that comes in contact with the back surface 113 of the flange 111.

In the above embodiment, the screw unit 310 of the electrical device fastener 300 has the pressing member 330 on its one end. The embodiment should not be limited to this structure. The screw unit 310 may not include the pressing member 330. In this case, the distal end of the screw 311 opposite to the screw head 312 presses the panel 400.

In the above embodiment, each electrical device fastener 300 includes the two engagement parts 322 and the single latch part 323, and the housing 20 includes the single movement restricting part 124. The embodiment should not be limited to this structure. The numbers of these parts and their arrangements may be modified as necessary.

In the above embodiment, the movement restricting part 124 is defined by forming the through-hole in the housing 20. The embodiment should not be limited to this structure. The movement restricting part 124 may be a protrusion that protrudes from the housing 20. In this case, the latch part 323 may be shaped accordingly to allow its engagement with the movement restricting part.

In the above embodiment, the front housing 100 and the rear housing 200 of the electrical device 10 are made of resin, and the electrical device fasteners 300 are made of metal. The embodiment should not be limited to these materials. The materials of these components may be modified as necessary.

In the above embodiment, the shaft 122 connects the two protrusions 121 protruding from the back end of the front housing 100. The embodiment should not be limited to this structure. The shaft 122 may be flush with the back end of the front housing 100. In this case, for example, the shaft 122 may be defined by forming a through-hole in the front housing 100 in the vertical direction at a position frontward from the back end of the front housing 100.

In the above embodiment, the housing 20 includes the front housing 100 and the rear housing 200. The embodiment should not be limited to this structure. The housing 20 may include more parts. Alternatively, the housing 20 may be formed integrally by injection molding.

The present invention is applicable to any electrical device to be installed onto a panel.

The embodiments disclosed are to be considered in all respects as illustrative and not restrictive, the scope of the invention being indicated by the appended claims rather than by the foregoing description, and all changes that come within the scope of the claims are intended to be embraced therein.

### REFERENCE SIGNS LIST

- 10: electrical device
- 20: housing
- 30: internal component
- 40: accommodating unit
- 100: front housing
- 111: flange
- 112: frame
- 113: back surface
- 120: first structural part
- 121: protrusion
- 122: shaft
- 123: recess
- 124: movement restricting part
- 124a: contact surface
- 200: rear housing
- 210: side wall
- 220: second structural part
- 221: recess
- 222: seat
- 222a: curved surface
- 223: protrusion
- 224: recess
- 225: lightly-holding mechanism
- 300: electrical device fastener
- 310: screw unit
- 311: screw
- 312: screw head
- 320: base
- 321: main surface
- 322: engagement part
- 323: latch part
- 324: screw-receiving hole
- 330: pressing member
- 331: threaded hole
- 332: pressing surface
- 400: panel

## Claims

1. An electrical device (10) to be fitted into an opening of a panel (400) and fastened to the panel (400), the electrical device (10) comprising:
a housing (20) including a front portion (100) to be positioned frontward from the panel (400) and a back portion (200) to be positioned backward from the panel (400) when the electrical device (10) is fastened to the panel (400); and
an electrical device fastener (300) configured to install the housing (20) onto the panel (400) in a removable manner,
wherein the electrical device fastener (300) is attached to the housing (20) in a rotatable manner to move between a first position enabling the housing (20) to be installed onto the panel (400) and a second position disabling the housing (20) to be installed onto the panel (400),
the housing (20) includes, on a contour surface thereof, a flange (111) extending outwardly, and
the electrical device fastener (300) includes
a base (320) having a screw-receiving hole (324), and
a screw (311) that is screwed with the screw-receiving hole (324),
**characterized in that**:
the housing (20) includes, on a contour surface thereof, a shaft (122) extending in a contour direction of the housing (20),
the electrical device fastener (300) includes an engagement part (322) that extends from the base (320) and is engaged with the shaft (122) in a rotatable manner,
when the electrical device fastener (300) is at the first position, an end of the screw (311) faces the flange (111), and when the electrical device fastener (300) is at the second position, the end of the screw (311) does not face the flange (111),
the housing (20) includes a movement restricting part (124) that is adapted to restrict backward movement of the base (320) when the electrical device fastener (300) is at the first position, and
wherein the electrical device (10) is configured such that when, in the electrical device (10) fitted in the opening of the panel (400), the electrical device fastener (300) is moved from the second position to the first position and the screw (311) is screwed into the base (320), the movement restricting part (124) restricts backward movement of the base (320) to cause an edge of the opening of the panel (400) to be sandwiched between the flange (111) and the screw (311) and thereby install the housing (20) onto the panel (400) with the electrical device fastener (300) and fasten the electrical device (10) to the panel (400).

2. The electrical device (10) according to claim 1, wherein the electrical device fastener (300) further includes a latch part (323) that extends from the base (320), and
the movement restricting part (124) includes a contact surface (124a) that is adapted to come in contact with the latch part (323).

3. The electrical device (10) according to claim 2, wherein the engagement part (322) and the latch part (323) are each shaped like a hook.

4. The electrical device (10) according to any one of claims 2 and 3, wherein
the engagement part (322) comprises a pair of engagement parts (322) arranged in a longitudinal direction of the shaft (122), and each engagement part (322) extends from the base (320), and
the latch part (323) extends from a portion of the base (320) that is between the pair of engagement parts (322).

5. The electrical device (10) according to one of claims 1 to 4, wherein
the housing (20) further includes a lightly-holding mechanism (225) that is adapted to come in contact with the electrical device fastener (300) to restrict rotation of the electrical device fastener (300) when the electrical device fastener (300) is at the second position, and
the electrical device fastener (300) is is adapted to be rotated against restriction placed by the lightly-holding mechanism (225) to enable movement of the electrical device fastener (300) from the second position to the first position.

6. The electrical device (10) according to one of claims 1 to 5, wherein the housing (20) further includes an accommodating unit (40) for accommodating the electrical device fastener (300) when the electrical device fastener (300) is at the second position, and
the shaft (122) extends across the accommodating unit (40).

7. The electrical device (10) according to claim 6, wherein
the housing (20) includes a front housing (100) that forms a frontward portion of the contour surface, and a rear housing (200) that forms a backward portion of the contour surface and is joined to the front housing (100),
the accommodating unit (40) is formed at a boundary between the front housing (100) and the rear housing (200) on the contour surface,
the shaft (122) is arranged in the front housing (100), and
the accommodating unit (40) is a recess (221) formed in the front housing (100) and the rear housing (200).

## Patentansprüche

1. Elektrische Vorrichtung (10), welche in eine Öffnung einer Platte (400) einsetzbar und an der Platte (400) befestigbar ist, umfassend:
ein Gehäuse (20) mit einem vorderen Gehäuseteil (100), welcher frontseitig zu der Platte (400) ausgerichtet ist und einem rückwärtigen Gehäuseteil (200), welcher rückseitig zu der Platte (400) ausgerichtet ist, wenn die elektrische Vorrichtung (10) an der Platte (400) fixiert ist; und
ein Befestigungsmittel (300), dazu eingerichtet, das Gehäuse (20) an der Platte (400) derart zu befestigen, dass das Gehäuse (20) entfernbar ist,
wobei das Befestigungsmittel (300) an dem Gehäuse (20) rotierbar angebracht ist, umfassend eine erste Drehposition, in welcher das Gehäuse (20) an der Platte (400) befestigbar ist, und eine zweite Drehposition, in welcher das das Gehäuse (20) nicht an der Platte (400) befestigbar ist,
das Gehäuse (20) umfasst, auf einer Außenseite, einen nach außen gerichteten Flansch (111), und
das Befestigungsmittel (300) umfasst
einen Sockel (320) mit einem Schraubloch (324), und
eine Schraube (311), welche mit dem Schraubloch (324) verschraubt ist,
**dadurch gekennzeichnet, dass**:
das Gehäuse (20) auf einer Außenseite einen Bolzen (122) umfasst, welcher entlang einer Richtung einer Außenseite des Gehäuses (20) verläuft,
das Befestigungsmittel (300) umfasst ein Verbindungsteil (322), das von dem Sockel (320) absteht und in rotierbarer Weise mit dem Bolzen (122) verbunden ist,
wenn sich das Befestigungsmittel (300) in der ersten Drehposition befindet, zeigt ein Ende der Schraube (311) auf den Flansch (111), und wenn sich das Befestigungsmittel (300) in der zweiten Drehposition befindet, zeigt das Ende der Schraube (311) nicht auf den Flansch (111),
das Gehäuse (20) umfasst ein eine Bewegung einschränkendes Teil (124), welches dazu eingerichtet ist, eine Rückwärtsbewegung des Sockels (320) einzuschränken wenn sich das Befestigungsmittel (300) in der ersten Drehposition befindet, und wobei
die elektrische Vorrichtung (10) dazu eingerichtet ist, dass, wenn die elektrische Vorrichtung (10) in die Öffnung der Platte (400) eingesetzt ist und das Befestigungsmittel (300) von der zweiten Drehposition in die erste Drehposition bewegt wird und die Schraube (311) in den Sockel (320) geschraubt ist, das eine Bewegung einschränkende Teil (124) eine Rückwärtsbewegung des Sockels (320) einschränkt und hierdurch eine Kante der Öffnung der Platte (400) von dem Flansch (111) und der Schraube (311) umschlossen ist, wodurch das Gehäuse (20) an der Platte (400) mittels des Befestigungsmittels (300) befestigt und die elektrische Vorrichtung (10) an der Platte (400) fixiert ist.

2. Elektrische Vorrichtung (10) nach Anspruch 1, wobei das Befestigungsmittel (300) eine Klinke (323), die von dem Sockel (320) absteht, aufweist, und
das eine Bewegung einschränkende Teil (124) eine Kontaktfläche (124a) aufweist, welche dazu eingerichtet ist, mit der Klinke (323) in Kontakt zu kommen.

3. Elektrische Vorrichtung (10) nach Anspruch 2, wobei das Verbindungsteil (322) und die Klinke (323) jeweils hakenförmig ausgeführt sind.

4. Elektrische Vorrichtung (10) nach Anspruch 2 oder 3, wobei
das Verbindungsteil (322) zwei Verbindungsteile (322), welche entlang einer Richtung des Bolzens (122) angeordnet sind, umfasst, und
die Klinke (323) von einem Bereich des Sockels (320) zwischen den zwei Verbindungsteilen (322) absteht.

5. Elektrische Vorrichtung (10) nach einem der Ansprüche 1 bis 4, wobei
das Gehäuse (20) einen schwachen Halteteil (225) umfasst, welcher dazu eingerichtet ist, mit dem Befestigungsmittel (300) derart in Kontakt zu kommen, dass die Drehung des Befestigungsmittels (300) in der zweiten Drehposition eingeschränkt ist, und
das Befestigungsmittel (300) dazu eingerichtet ist, gegen eine Einschränkung durch den schwachen Halteteil (225) gedreht zu werden und hierdurch eine Bewegung des Befestigungsmittels (300) von der zweiten Position in die erste Position zu ermöglichen.

6. Elektrische Vorrichtung (10) nach einem der Ansprüche 1 bis 5, wobei das Gehäuse (20) eine Aufnahmeeinrichtung (40) zur Aufnahme des Befestigungsmittels (300), wenn das Befestigungsmittel (300) in der zweiten Drehposition ist, umfasst, und wobei
der Bolzen (122) sich über die Aufnahmeeinrichtung (40) erstreckt.

7. Elektrische Vorrichtung (10) nach Anspruch 6, wobei
das Gehäuse (20) einen vorderen Gehäuseteil (100), welcher einen frontseitigen Teil der Außenseite bildet, und einen rückwärtigen Gehäuseteil (200), welcher einen rückseitigen Teil der Außenseite bildet und der mit dem vorderen Gehäuseteil (100) verbunden ist, umfasst,
die Aufnahmeeinrichtung (40) an einem Übergang von dem vorderen Gehäuseteil (100) zu dem rückwärtigen Gehäuseteil (200) auf der Außenseite ausgebildet ist,
der Bolzen (122) in dem vorderen Gehäuseteil (100) angeordnet ist, und die Aufnahmeeinrichtung (40) als Vertiefung (221) in dem vorderen Gehäuseteil (100) und dem rückwärtigen Gehäuseteil (200) ausgebildet ist.

## Revendications

1. Dispositif électrique (10) à monter dans une ouverture de panneau (400) et à fixer au panneau (400), le dispositif électrique (10) comprenant :
un boîtier (20) comportant une partie avant (100) devant être positionnée vers l'avant par rapport au panneau (400) et une partie arrière (200) devant être positionnée vers l'arrière par rapport au panneau (400),
lorsque le dispositif électrique (10) est fixé au panneau (400) ; et
un élément de fixation de dispositif électrique (300) conçu pour installer le boîtier (20) sur le panneau (400) de manière amovible,
dans lequel lorsque l'élément de fixation de dispositif électrique (300) est rendu solidaire du boîtier (20) de manière à pouvoir tourner pour se déplacer entre une première position permettant d'installer le boîtier (20) sur le panneau (400) et une seconde position empêchant d'installer le boîtier (20) sur le panneau (400),
le boîtier (20) comporte, sur une surface de contour de celui-ci, un rebord (111) s'étendant vers l'extérieur, et
l'élément de fixation de dispositif électrique (300) comporte :
une base (320) présentant un trou de réception de vis (324), et
une vis (311) qui est vissée dans le trou de réception de vis (324),
**caractérisé en ce que** :
le boîtier (20) comporte, sur une surface de contour de celui-ci, un axe (122) s'étendant dans une direction de contour du boîtier (20),
l'élément de fixation de dispositif électrique (300) comporte une pièce de mise en prise (322) qui s'étend à partir de la base (320) et qui est en prise avec l'axe (122) de manière à pouvoir tourner,
lorsque l'élément de fixation de dispositif électrique (300) se trouve dans la première position, une extrémité de la vis (311) fait face au rebord (111), et
lorsque l'élément de fixation de dispositif électrique (300) se trouve dans la seconde position, l'extrémité de la vis (311) ne fait pas face au rebord (111),
le boîtier (20) comporte une pièce de limitation de mouvement (124) qui est destinée à limiter le mouvement vers l'arrière de la base (320) lorsque l'élément de fixation de dispositif électrique (300) se trouve dans la première position, et
dans lequel le dispositif électrique (10) est conçu de telle sorte que lorsque,
dans le dispositif électrique (10) monté dans l'ouverture du panneau (400), l'élément de fixation de dispositif électrique (300) est déplacé de la seconde position à la première position et que la vis (311) est vissée sur la base (320), la pièce de limitation de mouvement (124) limite le mouvement vers l'arrière de la base (320) pour faire qu'un bord de l'ouverture du panneau (400) soit pris en sandwich entre le rebord (111) et la vis (311) et installer ainsi le boîtier (20) sur le panneau (400) avec l'élément de fixation de dispositif électrique (300) et fixer le dispositif électrique (10) au panneau (400).

2. Dispositif électrique (10) selon la revendication 1, dans lequel l'élément de fixation de dispositif électrique (300) comporte en outre une pièce de verrouillage (323) qui s'étend à partir de la base (320), et
la pièce de limitation de mouvement (124) présente une surface de contact (124a) qui est destinée à entrer en contact avec la pièce de verrouillage (323).

3. Dispositif électrique (10) selon la revendication 2, dans lequel la pièce de mise en prise (322) et la pièce de verrouillage (323) ont chacune la forme d'un crochet.

4. Dispositif électrique (10) selon l'une quelconque des revendications 2 et 3, dans lequel :
la pièce de mise en prise (322) comprend une paire de pièces de mise en prise (322) disposées dans une direction longitudinale de l'axe (122), et chaque pièce de mise en prise (322) s'étend à partir de la base (320), et
la pièce de verrouillage (323) s'étend à partir d'une partie de la base (320) qui se trouve entre la paire de pièces de mise en prise (322).

5. Dispositif électrique (10) selon l'une des revendications 1 à 4, dans lequel :
le boîtier (20) comporte en outre un mécanisme de légère retenue (225) qui est destiné à entrer en contact avec l'élément de fixation de dispositif électrique (300) pour limiter la rotation de l'élément de fixation de dispositif électrique (300), lorsque l'élément de fixation de dispositif électrique (300) se trouve dans la seconde position, et
l'élément de fixation de dispositif électrique (300) est destiné à être tourné en s'opposant à la limitation imposée par le mécanisme de légère retenue (225) pour permettre le mouvement de l'élément de fixation de dispositif électrique (300) de la seconde position à la première position.

6. Dispositif électrique (10) selon l'une des revendications 1 à 5, dans lequel le boîtier (20) comporte en outre une unité de logement (40) destinée à loger l'élément de fixation de dispositif électrique (300), lorsque l'élément de fixation de dispositif électrique (300) se trouve dans la seconde position, et
l'axe (122) s'étend en travers de l'unité de logement (40).

7. Dispositif électrique (10) selon la revendication 6, dans lequel :
le boîtier (20) comporte un boîtier avant (100) qui forme une partie vers l'avant de la surface de contour, et un boîtier arrière (200) qui forme une partie vers l'arrière de la surface de contour et qui est joint au boîtier avant (100),
l'unité de logement (40) est formée à une limite entre le boîtier avant (100) et le boîtier arrière (200) sur la surface de contour,
l'axe (122) est disposé sur le boîtier avant (100), et
l'unité de logement (40) est un évidement (221) formé dans le boîtier avant (100) et le boîtier arrière (200).
